# EUROPEAN PATENT APPLICATION

(11) **EP 4 852 081 A1**
(43) Date of publication of application: **09.12.2026**
(21) Application number: 24939346.3
(22) Date of filing: 14.08.2024
(51) Int. Cl.: H01M 4/36, H01M 4/62, H01M 4/13, H01M 10/0525, H01M 4/58

(54) **POSITIVE ELECTRODE SLURRY, POSITIVE ELECTRODE SHEET AND LITHIUM ION BATTERY**

(30) Priority: 22.05.2024 CN 202410640574
(71) Applicant: Zhejiang Geely Holding Group Co., Ltd., Hangzhou, Zhejiang 310051 (CN); VIRIDI E-MOBILITY TECHNOLOGY (NINGBO) CO., LTD., Ningbo, Zhejiang 315336 (CN); ZHEJIANG ZEEKR INTELLIGENT TECHNOLOGY CO., LTD., Ningbo, Zhejiang 315899 (CN)
(72) Inventor: DU, Changchao, Hangzhou, Zhejiang 310051 (CN); DU, Peng, Hangzhou, Zhejiang 310051 (CN); WEI, Yanwei, Hangzhou, Zhejiang 310051 (CN); PAN, Fuzhong, Hangzhou, Zhejiang 310051 (CN); NIU, Yaqi, Hangzhou, Zhejiang 310051 (CN)
(74) Representative: Murgitroyd & Company
(86) International application number: PCT/CN2024/112109
(87) International publication number: WO 2025/241328

(57) **Abstract**

The present application relates to the field of lithium ion batteries, in particular to a positive electrode slurry, a positive electrode sheet and a lithium ion battery. The positive electrode slurry comprises a positive electrode active material, a binder and a conductive agent; the binder comprises polyvinylidene fluoride and a composite binder, and the composite binder comprises an α,β-ethylenically unsaturated nitrile compound, an ionic liquid and organic acid ester; the conductive agent comprises graphene, the flake diameter D50 of the graphene being 0.1-2.0 nm Applying the positive electrode slurry to the positive electrode sheet can remarkably improve the compaction density of the positive electrode sheet and reduce the thickness of the positive electrode sheet, thereby remarkably improving the energy density of battery cells.

## Description

This application claims priority to Chinese Patent Application No. 202410640574.9, filed with the China Patent Office on May 22, 2024, and entitled " POSITIVE ELECTRODE SLURRY, POSITIVE ELECTRODE SHEET, AND LITHIUM ION BATTERY", which is incorporated herein by reference in its entirety.

### TECHNICAL FIELD

The present invention relates to the field of lithium-ion batteries, and specifically to a positive electrode slurry, a positive electrode sheet, and a lithium ion battery.

### BACKGROUND

In a cell of a lithium battery, the thickness of the positive electrode sheet typically accounts for over 55%. Increasing the compaction density of the positive electrode sheet can effectively reduce its thickness, thereby improving the energy density of the cell. However, because the true density of conductive agents and binders is low, the use of binders and conductive agents in the positive electrode slurry reduces the overall compaction density of the positive electrode sheet, further affecting the energy density of the cell.

During the preparation of the positive electrode sheet, the coated and dried electrode sheet needs to be rolled to enhance the bonding strength between the active material and the foil, preventing peeling during electrolyte immersion and battery use. Electrode rolling can compress the cell volume, increase the cell energy density, reduce the porosity among the active material, conductive agent, and binder inside the electrode sheet, lower the battery resistance, and improve battery performance. However, when the electrode sheet is rolled, it extends in all directions. The active material bonded on the current collector will slip under the push of horizontal pressure, thereby driving the extension of the current collector of the battery electrode sheet. An excessively high rolling elongation rate of the electrode sheet easily causes wavy wrinkles on the electrode sheet, thereby affecting the conductivity of the positive electrode sheet.

### SUMMARY

In view of this, the present invention aims to provide a positive electrode slurry, a positive electrode sheet, and a lithium ion battery to solve the problems in the prior art of low compaction density of the positive electrode sheet and high elongation rate of the electrode sheet after rolling.

One aspect of the present invention provides a positive electrode slurry. The positive electrode slurry includes a positive electrode active material, a binder, and a conductive agent;
where the binder includes polyvinylidene fluoride and a composite binder; and the composite binder includes an α,β-ethylenically unsaturated nitrile compound, an ionic liquid, and an organic acid ester; and
the conductive agent includes graphene; and the graphene has a lateral size D50 of 0.1 to 2.0 nm.

In the positive electrode slurry provided by the present invention, the binder includes polyvinylidene fluoride and a composite binder. The addition of the composite binder can increase the flexibility of the electrode sheet, allowing lithium iron phosphate particles to rearrange more easily during rolling, reducing the extrusion of the aluminum foil of the positive electrode current collector, thereby lowering the rolling elongation rate. Meanwhile, in the positive electrode slurry of the present invention, the conductive agent contains small-lateral-size graphene, which can significantly enhance the slip of lithium iron phosphate during rolling, thereby increasing the compaction density of the positive electrode sheet.

Optionally, the graphene has a lateral size D50 of 0.1 to 1.3 nm, and the graphene has a number of layers of 1 to 12; and the mass fraction of the graphene is 0.05% to 0.3% based on the total mass of the positive electrode slurry.

Optionally, the conductive agent further includes conductive carbon black and/or carbon nanotubes.

Optionally, based on the total mass of the positive electrode slurry, a mass fraction of the conductive agent is 0.1% to 2.5%. Optionally, a mass fraction of the conductive carbon black is 0.1% to 1.6%. Optionally, a mass fraction of the carbon nanotubes is 0.1% to 0.9%.

Optionally, based on the total mass of the positive electrode slurry, a mass fraction of the binder is 1.0% to 3.0%, and a mass ratio of the polyvinylidene fluoride to the composite binder is from 19:1 to 4:1. Optionally, based on a total mass of the composite binder, a mass fraction of the α,β-ethylenically unsaturated nitrile compound is 85% to 99%, a mass fraction of the ionic liquid is 0.5% to 10%, and a mass fraction of the organic acid ester is 0.5% to 10%.

Optionally, the α,β-ethylenically unsaturated nitrile compound is selected from at least one of acrylonitrile, α-halogenated acrylonitrile, or α-alkylacrylonitrile. Optionally, the ionic liquid is selected from at least one of 1-ethyl-3-methylimidazolium imide, 1-butyl-3-methylimidazolium imide, 1-ethyl-3-methylimidazolium tetrafluoroborate, 1-ethyl-3-methylimidazolium hexafluorophosphate, 1-butyl-1-methylpyrrolidinium imide, N-butylpyridinium imide, 1-ethyl-3-methylimidazolium methyl phosphate, N-butyl-N-methylpyrrolidinium bis(trifluoromethanesulfonyl)imide, 1-ethyl-3-methylimidazolium dihydrogen ammonium salt, 1-ethyl-2,3-dimethylimidazolium tetrafluoroborate, or 1-ethyl-2,3-dimethylimidazolium hexafluorophosphate. Optionally, the organic acid ester is selected from at least one of a fatty acid ester, a citrate ester, or an aliphatic dibasic acid ester; the citrate ester is selected from at least one of tributyl citrate, acetyl tributyl citrate, isopropyl citrate, propylene glycol polyoxyethylene/polyoxypropylene ether monoester of citric acid, alkyl glycoside monoester of citric acid, or glyceryl stearate citrate; and the aliphatic dibasic acid ester is selected from at least one of dioctyl adipate, dioctyl azelate, dioctyl sebacate, or dibutyl sebacate.

Optionally, the positive electrode active material is selected from at least one of lithium iron phosphate, lithium manganese iron phosphate, or nickel-cobalt-manganese ternary material.

A second aspect of the present invention provides a positive electrode sheet. The positive electrode sheet includes a current collector, a conductive layer coated on a surface of the current collector, and a positive electrode active material layer coated on a surface of the conductive layer, where the positive electrode active material layer includes the aforementioned positive electrode slurry.

Optionally, a difference between the compaction density of the positive electrode sheet and the compaction density of the positive electrode active material powder in the positive electrode sheet is greater than or equal to 0.25 g/cc, and a rolling elongation rate of the positive electrode sheet is less than or equal to 1.5%.

A third aspect of the present invention provides a lithium ion battery. The lithium ion battery includes a positive electrode sheet, and the positive electrode sheet is the aforementioned positive electrode sheet.

Through the above technical solution, the present invention provides a positive electrode slurry, a positive electrode sheet, and a lithium ion battery. The positive electrode slurry includes a positive electrode active material, a binder, and a conductive agent, where the binder includes a mixture of polyvinylidene fluoride and a composite binder. The addition of the composite binder can increase the flexibility of the electrode sheet, reduce extrusion on the aluminum foil of the positive electrode current collector, and lower the rolling elongation rate. Meanwhile, the conductive agent contains small-lateral-size graphene, and the addition of small-lateral-size graphene can significantly enhance the slip of lithium iron phosphate during rolling, thereby increasing the compaction density of the positive electrode sheet.

Other features and advantages of the present invention will be described in detail in the following specific embodiments.

### DESCRIPTION OF EMBODIMENTS

The present invention discloses a positive electrode slurry, a positive electrode sheet, and a lithium ion battery. Those skilled in the art may implement the present invention by referring to the content herein and appropriately modifying process parameters. It should be particularly noted that all similar substitutions and modifications are obvious to those skilled in the art and are deemed to be included in the present invention. The method and application of the present invention have been described through preferred embodiments. It is obvious that relevant persons can make changes or appropriate modifications and combinations to the methods and applications described herein without departing from the content, spirit, and scope of the present invention to implement and apply the technology of the present invention.

In the description of the present invention, the term "at least one of" or other similar terms connecting a list of items can mean any combination of the listed items. For example, if items A and B are listed, the phrase "at least one of A or B" means only A; only B; or A and B. In another example, if items A, B, and C are listed, the phrase "at least one of A, B, or C" means only A; or only B; only C; A and B (excluding C); A and C (excluding B); B and C (excluding A); or all of A, B, and C. Item A may contain a single element or multiple elements. Item B may contain a single element or multiple elements. Item C may contain a single element or multiple elements.

In the description of the present invention, the term "compaction density" is one of the reference indicators for material energy density, and the specific calculation formula is: compaction density = areal density / (thickness of the electrode sheet after rolling - thickness of the current collector), unit: g/cc. The term "rolling elongation rate" is the percentage of the areal density ΔM after rolling to the areal density M before rolling of the electrode sheet, and the specific calculation formula is: δ = Δ M / M × 100 %.

The endpoints and any values of the ranges disclosed herein are not limited to the precise ranges or values, and these ranges or values should be understood to contain values close to these ranges or values. For numerical ranges, the end point values between various ranges, between the end point values of various ranges and individual point values, and between individual point values may be combined with each other to obtain one or more new numerical ranges, which should be considered as specifically disclosed herein.

Unless otherwise specified, all embodiments and optional embodiments of the present application may be combined with each other to form new technical solutions.

Unless otherwise specified, all technical features and optional technical features of the present application may be combined with each other to form new technical solutions.

Unless otherwise specified, "comprising" and "including" mentioned in the present application represent open-endedness or closed-endedness. For example, the "comprising" and "including" may mean that other components not listed may also be included or comprised, or that only the listed components are included or comprised.

To solve the problems in the prior art of low compaction density of the positive electrode sheet and high elongation rate after rolling, the present invention adopts the following technical solution:
One aspect of the present invention provides a positive electrode slurry, which includes a positive electrode active material, a binder, and a conductive agent. The binder includes polyvinylidene fluoride and a composite binder. The composite binder includes an α,β-ethylenically unsaturated nitrile compound, an ionic liquid, and an organic acid ester. The conductive agent includes graphene, and the graphene has a lateral size D50 of 0.1 to 2.0 nm.

In the positive electrode slurry of the present invention, the binder includes polyvinylidene fluoride (PVDF) and a composite binder, where the composite binder includes an α,β-ethylenically unsaturated nitrile compound, an ionic liquid, and an organic acid ester. The addition of the composite binder can increase the flexibility of the electrode sheet, allowing lithium iron phosphate particles to rearrange more easily during rolling, reducing the extrusion on the aluminum foil of the positive electrode current collector, thereby lowering the rolling elongation rate. Meanwhile, in the positive electrode slurry of the present invention, the conductive agent contains graphene, and the lateral size D50 of the graphene is 0.1 to 2.0 nm. The addition of small-lateral-size graphene can significantly enhance the slip of lithium iron phosphate during rolling, thereby increasing the compaction density of the positive electrode sheet.

To further enhance the slip effect of lithium iron phosphate, the lateral size D50 of the graphene may be 0.1 to 1.3 nm, and the number of layers of the graphene may be 1 to 12. Exemplarily, the lateral size D50 of the graphene may be 0.2 to 0.8 nm, and the number of layers of the graphene may be 3 to 9 layers. As an exemplary embodiment of the present invention, the lateral size D50 of the graphene may be 0.2 to 0.6 nm, and the number of layers of the graphene may be 3 to 6 layers. Optionally, based on the total mass of the positive electrode slurry, the mass fraction of the graphene is 0.05% to 0.3%. Exemplarily, the mass fraction of the graphene may be 0.09% to 0.25%.

Graphene used in the present invention may be purchased from a merchant, for example, may be purchased from HZ013XG model of Hefei Haizhou New Material Technology Co., Ltd.

Exemplarily, the conductive agent may further include conductive carbon black and/or carbon nanotubes.

In the present invention, based on the total mass of the positive electrode slurry, the mass fraction of the conductive agent may be 0.1% to 2.5%. Optionally, based on the total mass of the positive electrode slurry, the mass fraction of the conductive carbon black is 0.1% to 1.6%; and the mass fraction of the carbon nanotubes is 0.1% to 0.9%. An appropriate content of the conductive agent can effectively improve the migration rate of lithium ions in the electrode material while reducing the contact resistance of the electrode and accelerating a movement rate of electrons, thereby improving the charge and discharge efficiency of the electrode. Exemplarily, based on the total mass of the positive electrode slurry, the mass fraction of the conductive agent is 0.3% to 1.0%, the mass fraction of the conductive carbon black is 0.3% to 0.9%. The mass fraction of the carbon nanotubes is 0.2% to 0.5%.

In an exemplary embodiment of the present invention, based on the total mass of the positive electrode slurry, the mass fraction of the binder may be 1.0% to 3.0%. Exemplarily, the mass fraction of the binder may be 1.2% to 2.0%. The mass ratio of the polyvinylidene fluoride to the composite binder may be 19:1 to 4:1. Optionally, based on the total mass of the composite binder, the mass fraction of the α,β-ethylenically unsaturated nitrile compound is 85% to 99%, the mass fraction of the ionic liquid is 0.5% to 10%, and the mass fraction of the organic acid ester is 0.5% to 10%. As an exemplary embodiment of the present invention, based on the total mass of the composite binder, the mass fraction of the α,β-ethylenically unsaturated nitrile compound is 90% to 99%, the mass fraction of the ionic liquid is 0.5% to 5%, and the mass fraction of the organic acid ester is 0.5% to 5%. In this embodiment, the positive electrode slurry can impart better flexibility to the positive electrode sheet, facilitate the rearrangement of lithium iron phosphate particles, and greatly reduce the extrusion on the positive electrode current collector.

In an exemplary embodiment of the present invention, the α,β-ethylenically unsaturated nitrile compound may be selected from at least one of acrylonitrile, α-halogenated acrylonitrile, or α-alkylacrylonitrile. Optionally, the ionic liquid is selected from at least one of 1-ethyl-3-methylimidazolium imide, 1-butyl-3-methylimidazolium imide, 1-ethyl-3-methylimidazolium tetrafluoroborate, 1-ethyl-3-methylimidazolium hexafluorophosphate, 1-butyl-1-methylpyrrolidinium imide, N-butylpyridinium imide, 1-ethyl-3-methylimidazolium methyl phosphate, N-butyl-N-methylpyrrolidinium bis(trifluoromethanesulfonyl)imide, 1-ethyl-3-methylimidazolium dihydrogen ammonium salt, 1-ethyl-2,3-dimethylimidazolium tetrafluoroborate, or 1-ethyl-2,3-dimethylimidazolium hexafluorophosphate. Optionally, the organic acid ester is selected from at least one of a fatty acid ester, a citrate ester, or an aliphatic dibasic acid ester. Exemplarily, the citrate ester is selected from at least one of tributyl citrate, acetyl tributyl citrate, isopropyl citrate, propylene glycol polyoxyethylene/polyoxypropylene ether monoester of citric acid, alkyl glycoside monoester of citric acid, or glyceryl stearate citrate; and the aliphatic dibasic acid ester is selected from at least one of dioctyl adipate, dioctyl azelate, dioctyl sebacate, or dibutyl sebacate.

Exemplarily, the positive electrode active material may be selected from at least one of lithium iron phosphate, lithium manganese iron phosphate, or nickel-cobalt-manganese ternary material.

Exemplarily, the positive electrode slurry of the present invention further includes a solvent, such as N-methylpyrrolidone.

A second aspect of the present invention provides a high-compaction-density positive electrode sheet. The positive electrode sheet includes a current collector, a conductive layer coated on a surface of the current collector, and a positive electrode active material layer coated on a surface of the conductive layer, where the positive electrode active material layer includes the aforementioned positive electrode slurry.

The positive electrode sheet of the present invention has significantly improved compaction density and significantly reduced rolling elongation rate, and can significantly enhance the energy density of the cell when applied to cell manufacturing.

Optionally, in the present invention, a difference between the compaction density of the positive electrode sheet and the compaction density of the positive electrode active material powder in the positive electrode sheet is greater than or equal to 0.25 g/cc, and a rolling elongation rate of the positive electrode sheet is less than or equal to 1.5%.

In an exemplary embodiment of the present invention, a preparation process of the positive electrode sheet may include: mixing the positive electrode active material, conductive carbon black, and polyvinylidene fluoride to obtain a first material. N-methylpyrrolidone is added to the first material, and kneading is performed to obtain a second material. Graphene, carbon nanotube slurry, and composite binder are added to the second material, and the positive electrode slurry is obtained after high-speed dispersion. The positive electrode slurry is coated on an aluminum foil by extrusion coating, and the positive electrode sheet is formed after drying. The positive electrode sheet is then rolled to a designed thickness. The positive electrode sheet provided by the present invention is feasible for mass production.

A third aspect of the present invention provides a lithium ion battery. The lithium ion battery includes a positive electrode sheet, where the positive electrode sheet is the aforementioned positive electrode sheet.

The present invention is further described in detail below through embodiments. All raw materials used in the embodiments can be obtained through commercial channels.

### Embodiment 1

A first material is obtained by mixing 96 parts of lithium iron phosphate, 1 part of conductive carbon black, and 2.2 parts of polyvinylidene fluoride. N-methylpyrrolidone is added to the first material, and kneading is performed to obtain a second material. In the second material, 0.2 parts of graphene, 0.5 parts of carbon nanotube slurry, and 0.1 parts of composite binder are added, and after high-speed dispersion, the positive electrode slurry of the present embodiment is obtained. In this embodiment, the graphene used has 12 layers and a lateral size D50 of 0.8 nm. Based on the total mass of the composite binder, the composite binder used in this embodiment includes 30 wt% of acrylonitrile, 30 wt% of 1-ethyl-3-methylimidazolium imide, and 40 wt% of tributyl citrate.

The prepared positive electrode slurry is coated on the aluminum foil by extrusion coating, and after drying, a positive electrode sheet is formed.

### Embodiment 2

A first material is obtained by mixing 96 parts of lithium iron phosphate, 1 part of conductive carbon black, and 2.2 parts of polyvinylidene fluoride. N-methylpyrrolidone is added to the first material, and kneading is performed to obtain a second material. In the second material, 0.2 parts of graphene, 0.5 parts of carbon nanotube slurry, and 0.1 parts of composite binder are added, and after high-speed dispersion, the positive electrode slurry of this embodiment is obtained. In this embodiment, the graphene used has 6 layers and a lateral size D50 of 0.6 nm. Based on the total mass of the composite binder, the composite binder used in this embodiment includes 30 wt% of acrylonitrile, 30 wt% of 1-ethyl-3-methylimidazolium imide, and 40 wt% of tributyl citrate.

The prepared positive electrode slurry is coated on the aluminum foil by extrusion coating, and after drying, a positive electrode sheet is formed.

### Embodiment 3

A first material is obtained by mixing 96 parts of lithium iron phosphate, 1 part of conductive carbon black, and 2.2 parts of polyvinylidene fluoride. N-methylpyrrolidone is added to the first material, and kneading is performed to obtain a second material. In the second material, 0.2 parts of graphene, 0.5 parts of carbon nanotube slurry, and 0.1 parts of composite binder are added, and after high-speed dispersion, the positive electrode slurry of this embodiment is obtained. In this embodiment, the graphene used has 6 layers and a lateral size D50 of 0.2 nm. Based on the total mass of the composite binder, the composite binder used in this embodiment includes 30 wt% of acrylonitrile, 30 wt% of 1-ethyl-3-methylimidazolium imide, and 40 wt% of tributyl citrate.

The prepared positive electrode slurry is coated on the aluminum foil by extrusion coating, and after drying, a positive electrode sheet is formed.

### Embodiment 4

A first material is obtained by mixing 95.6 parts of lithium iron phosphate, 1 part of conductive carbon black, and 2.2 parts of polyvinylidene fluoride. N-methylpyrrolidone is added to the first material, and kneading is performed to obtain a second material. In the second material, 0.2 parts of graphene, 0.5 parts of carbon nanotube slurry, and 0.5 parts of composite binder are added, and after high-speed dispersion, the positive electrode slurry of this embodiment is obtained. In this embodiment, the graphene used has 6 layers and a lateral size D50 of 0.2 nm. Based on the total mass of the composite binder, the composite binder used in this embodiment includes 30 wt% of acrylonitrile, 30 wt% of 1-ethyl-3-methylimidazolium imide, and 40 wt% of tributyl citrate.

The prepared positive electrode slurry is coated on the aluminum foil by extrusion coating, and after drying, a positive electrode sheet is formed.

### Embodiment 5

A first material is obtained by mixing 96 parts of lithium iron phosphate, 1 part of conductive carbon black, and 2.2 parts of polyvinylidene fluoride. N-methylpyrrolidone is added to the first material, and kneading is performed to obtain a second material. In the second material, 0.2 parts of graphene, 0.5 parts of carbon nanotube slurry, and 0.1 parts of composite binder are added, and after high-speed dispersion, the positive electrode slurry of this embodiment is obtained. In this embodiment, the graphene used has 2 layers and a lateral size D50 of 0.2 nm. Based on the total mass of the composite binder, the composite binder used in this Embodiment includes 30 wt% of acrylonitrile, 30 wt% of 1-ethyl-3-methylimidazolium imide, and 40 wt% of tributyl citrate.

The prepared positive electrode slurry is coated on the aluminum foil by extrusion coating, and after drying, a positive electrode sheet is formed.

### Embodiment 6

A first material is obtained by mixing 96 parts of lithium iron phosphate, 1.55 parts of conductive carbon black, and 2.2 parts of polyvinylidene fluoride. N-methylpyrrolidone is added to the first material, and kneading is performed to obtain a second material. In the second material, 0.05 parts of graphene, 0.1 part of carbon nanotube slurry, and 0.1 part of composite binder are added, and after high-speed dispersion, the positive electrode slurry of this embodiment is obtained. In this embodiment, the graphene used has 2 layers and a lateral size D50 of 0.2 nm. Based on the total mass of the composite binder, the composite binder used in this embodiment includes 30 wt% of acrylonitrile, 30 wt% of 1-ethyl-3-methylimidazolium imide, and 40 wt% of tributyl citrate.

The prepared positive electrode slurry is coated on the aluminum foil by extrusion coating, and after drying, a positive electrode sheet is formed.

### Embodiment 7

A first material is obtained by mixing 96 parts of lithium iron phosphate, 0.5 parts of conductive carbon black, and 2.2 parts of polyvinylidene fluoride. N-methylpyrrolidone is added to the first material, and kneading is performed to obtain a second material. In the second material, 0.3 parts of graphene, 0.9 parts of carbon nanotube slurry, and 0.1 part of composite binder are added, and after high-speed dispersion, the positive electrode slurry of this embodiment is obtained. In this embodiment, the graphene used has 6 layers and a lateral size D50 of 0.6 nm. Based on the total mass of the composite binder, the composite binder used in this embodiment includes 30 wt% of acrylonitrile, 30 wt% of 1-ethyl-3-methylimidazolium imide, and 40 wt% of tributyl citrate.

The prepared positive electrode slurry is coated on the aluminum foil by extrusion coating, and after drying, a positive electrode sheet is formed.

### Comparative example 1

A first material is obtained by mixing 96 parts of lithium iron phosphate, 1 part of conductive carbon black, and 2.3 parts of polyvinylidene fluoride. N-methylpyrrolidone is added to the first material, and kneading is performed to obtain a second material. In the second material, 0.2 parts of graphene and 0.5 parts of carbon nanotube slurry are added, and after high-speed dispersion, the positive electrode slurry of this comparative example is obtained. In this comparative example, the graphene used has 15 layers and a lateral size D50 of 8 nm.

The prepared positive electrode slurry is coated on the aluminum foil by extrusion coating, and after drying, a positive electrode sheet is formed.

### Comparative example 2

A first material is obtained by mixing 96 parts of lithium iron phosphate, 1 part of conductive carbon black, and 2.3 parts of polyvinylidene fluoride. N-methylpyrrolidone is added to the first material, and kneading is performed to obtain a second material. In the second material, 0.2 parts of graphene and 0.5 parts of carbon nanotube slurry are added, and after high-speed dispersion, the positive electrode slurry of this comparative example is obtained. In this comparative example, the graphene used has 12 layers and a lateral size D50 of 0.8 nm.

The prepared positive electrode slurry is coated on the aluminum foil by extrusion coating, and after drying, a positive electrode sheet is formed.

### Comparative example 3

A first material is obtained by mixing 96 parts of lithium iron phosphate, 1 part of conductive carbon black, and 2.2 parts of polyvinylidene fluoride. N-methylpyrrolidone is added to the first material, and kneading is performed to obtain a second material. In the second material, 0.2 parts of graphene, 0.5 parts of carbon nanotube slurry, and 0.1 parts of composite binder are added, and after high-speed dispersion, the positive electrode slurry of this comparative example is obtained. In this comparative example, the graphene used has 15 layers and a lateral size D50 of 8 nm. Based on the total mass of the composite binder, the composite binder used in this comparative example includes 30 wt% of acrylonitrile, 30 wt% of 1-ethyl-3-methylimidazolium imide, and 40 wt% of tributyl citrate.

The prepared positive electrode slurry is coated on the aluminum foil by extrusion coating, and after drying, a positive electrode sheet is formed.

### Comparative example 4

A first material is obtained by mixing 96 parts of lithium iron phosphate, 1 part of conductive carbon black, and 2.2 parts of polyvinylidene fluoride. N-methylpyrrolidone is added to the first material, and kneading is performed to obtain a second material. In the second material, 0.2 parts of graphene, 0.5 parts of carbon nanotube slurry, and 0.1 parts of composite binder are added, and after high-speed dispersion, the positive electrode slurry of this comparative example is obtained. In this comparative example, the graphene used has 12 layers and a lateral size D50 of 3 nm. Based on the total mass of the composite binder, the composite binder used in this comparative example includes 30 wt% of acrylonitrile, 30 wt% of 1-ethyl-3-methylimidazolium imide, and 40 wt% of tributyl citrate.

The prepared positive electrode slurry is coated on the aluminum foil by extrusion coating, and after drying, a positive electrode sheet is formed.

The composition ratios of the positive electrode slurry in Embodiments 1 to 7 and Comparative examples 1 to 4 are shown in Table 1 (the content of each component in Table 1 is based on the total mass of the positive electrode slurry).

**Table 1**

| Item | Positive electrode active material | Conductive agent | | | | | Binder | |
|---|---|---|---|---|---|---|---|---|
| | Lithium iron phosphate content | Conductive carbon black content | Carbon nanotube content | Graphene content | Graphene number of layers | Graphene lateral size D50 (nm) | PVDF content | Composite binder content |
| Embodiment 1 | 96.0% | 1.0% | 0.5% | 0.2% | 12 | 0.8 | 2.2% | 0.1% |
| Embodiment 2 | 96.0% | 1.0% | 0.5% | 0.2% | 6 | 0.6 | 2.2% | 0.1% |
| Embodiment 3 | 96.0% | 1.0% | 0.5% | 0.2% | 6 | 0.2 | 2.2% | 0.1% |
| Embodiment 4 | 95.6% | 1.0% | 0.5% | 0.2% | 6 | 0.2 | 2.2% | 0.5% |
| Embodiment 5 | 96.0% | 1.0% | 0.5% | 0.2% | 2 | 0.2 | 2.2% | 0.1% |
| Embodiment 6 | 96.0% | 1.55% | 0.1% | 0.05% | 2 | 0.2 | 2.2% | 0.1% |
| Embodiment 7 | 96.0% | 0.5% | 0.9% | 0.3% | 6 | 0.6 | 2.2% | 0.1% |
| Comparative example 1 | 96.0% | 1.0% | 0.5% | 0.2% | 15 | 8 | 2.3% | / |
| Comparative example 2 | 96.0% | 1.0% | 0.5% | 0.2% | 12 | 0.8 | 2.3% | / |
| Comparative example 3 | 96.0% | 1.0% | 0.5% | 0.2% | 15 | 8 | 2.2% | 0.1% |
| Comparative example 4 | 96.0% | 1.0% | 0.5% | 0.2% | 12 | 3 | 2.2% | 0.1% |

### Test example 1

The compaction densities of lithium iron phosphate and the positive electrode sheets prepared in Embodiments 1 to 7 and Comparative examples 1 to 4 are measured respectively. The measurement results are shown in Table 2.

**Table 2**

| Item | Lithium iron phosphate powder compaction density | Positive electrode sheet compaction density | Difference between positive electrode sheet compaction density and lithium iron phosphate powder compaction density |
|---|---|---|---|
| | g/cc | g/cc | |
| Embodiment 1 | 2.4 | 2.65 | 0.25 |
| Embodiment 2 | 2.4 | 2.67 | 0.27 |
| Embodiment 3 | 2.4 | 2.68 | 0.28 |
| Embodiment 4 | 2.4 | 2.68 | 0.35 |
| Embodiment 5 | 2.4 | 2.70 | 0.30 |
| Embodiment 6 | 2.4 | 2.65 | 0.25 |
| Embodiment 7 | 2.4 | 2.72 | 0.32 |
| Comparative example 1 | 2.4 | 2.55 | 0.15 |
| Comparative example 2 | 2.4 | 2.60 | 0.20 |
| Comparative example 3 | 2.4 | 2.60 | 0.20 |
| Comparative example 4 | 2.4 | 2.63 | 0.23 |

As can be seen from Table 2, the compaction density of the positive electrode sheets prepared in Embodiments 1 to 7 can reach up to 2.68 g/cc, which is significantly improved compared with the compaction density of the positive electrode sheets prepared in Comparative examples 1 to 4.

### Test example 2

The rolling elongation rates of lithium iron phosphate and the positive electrode sheets prepared in Embodiments 1 to 7 and Comparative examples 1 to 4 are measured respectively. The measurement results are shown in Table 3.

**Table 3**

| Item | Rolling elongation rate |
|---|---|
| Embodiment 1 | 1.5% |
| Embodiment 2 | 1.4% |
| Embodiment 3 | 1.4% |
| Embodiment 4 | 1.0% |
| Embodiment 5 | 1.2% |
| Embodiment 6 | 1.5% |
| Embodiment 7 | 1.1% |
| Comparative example 1 | 1.5% |
| Comparative example 2 | 1.8% |
| Comparative example 3 | 1.8% |
| Comparative example 4 | 1.6% |

As can be seen from Table 3, the elongation rate after rolling of the positive electrode sheets prepared in Embodiments 1 to 7 is significantly reduced compared with the elongation rate after rolling of the positive electrode sheets prepared in Comparative examples 1 to 4.

The foregoing descriptions are merely preferred implementations of the present invention. It should be noted that, for a person of ordinary skill in the art, various improvements and modifications may be made without departing from the principles of the present invention, and these improvements and modifications shall also be regarded as falling within the protection scope of the present invention.

## Claims

1. A positive electrode slurry, **characterized by** comprising a positive electrode active material, a binder and a conductive agent;
wherein the binder comprises polyvinylidene fluoride and a composite binder; and the composite binder comprises an α,β-ethylenically unsaturated nitrile compound, an ionic liquid, and an organic acid ester; and
the conductive agent comprises graphene; and the graphene has a lateral size D50 of 0.1 to 2.0 nm.

2. The positive electrode slurry according to claim 1, wherein the graphene has a lateral size D50 of 0.1 to 1.3 nm, and the graphene has a number of layers of 1 to 12; and
based on a total mass of the positive electrode slurry, a mass fraction of the graphene is 0.05% to 0.3%.

3. The positive electrode slurry according to claim 1 or 2, wherein the conductive agent further comprises conductive carbon black and/or carbon nanotubes.

4. The positive electrode slurry according to claim 3, wherein, based on the total mass of the positive electrode slurry, a mass fraction of the conductive agent is 0.1% to 2.5%; a mass fraction of the conductive carbon black is 0.1% to 1.6%; and a mass fraction of the carbon nanotubes is 0.1% to 0.9%.

5. The positive electrode slurry according to any one of claims 1 to 4, wherein, based on the total mass of the positive electrode slurry, a mass fraction of the binder is 1.0% to 3.0%, and a mass ratio of the polyvinylidene fluoride to the composite binder is from 19:1 to 4:1; and
based on a total mass of the composite binder, a mass fraction of the α,β-ethylenically unsaturated nitrile compound is 85% to 99%, a mass fraction of the ionic liquid is 0.5% to 10%, and a mass fraction of the organic acid ester is 0.5% to 10%.

6. The positive electrode slurry according to any one of claims 1 to 5, wherein the α,β-ethylenically unsaturated nitrile compound is selected from at least one of acrylonitrile, α-halogenated acrylonitrile, or α-alkylacrylonitrile;
the ionic liquid is selected from at least one of 1-ethyl-3-methylimidazolium imide, 1-butyl-3-methylimidazolium imide, 1-ethyl-3-methylimidazolium tetrafluoroborate, 1-ethyl-3-methylimidazolium hexafluorophosphate, 1-butyl-1-methylpyrrolidinium imide, N-butylpyridinium imide, 1-ethyl-3-methylimidazolium methyl phosphate, N-butyl-N-methylpyrrolidinium bis(trifluoromethanesulfonyl)imide, 1-ethyl-3-methylimidazolium dihydrogen ammonium salt, 1-ethyl-2,3-dimethylimidazolium tetrafluoroborate, or 1-ethyl-2,3-dimethylimidazolium hexafluorophosphate; and
the organic acid ester is selected from at least one of a fatty acid ester, a citrate ester, or an aliphatic dibasic acid ester; the citrate ester is selected from at least one of tributyl citrate, acetyl tributyl citrate, isopropyl citrate, propylene glycol polyoxyethylene/polyoxypropylene ether monoester of citric acid, alkyl glycoside monoester of citric acid, or glyceryl stearate citrate; and the aliphatic dibasic acid ester is selected from at least one of dioctyl adipate, dioctyl azelate, dioctyl sebacate, or dibutyl sebacate.

7. The positive electrode slurry according to any one of claims 1 to 6, wherein the positive electrode active material is selected from at least one of lithium iron phosphate, lithium manganese iron phosphate, or nickel-cobalt-manganese ternary material.

8. A positive electrode sheet, **characterized in that** the positive electrode sheet comprises a current collector, a conductive layer coated on a surface of the current collector, and a positive electrode active material layer coated on a surface of the conductive layer, wherein the positive electrode active material layer comprises the positive electrode slurry according to any one of claims 1 to 7.

9. The positive electrode sheet according to claim 8, wherein a difference between the compaction density of the positive electrode sheet and the compaction density of the positive electrode active material powder in the positive electrode sheet is greater than or equal to 0.25 g/cc, and a rolling elongation rate of the positive electrode sheet is less than or equal to 1.5%.

10. A lithium ion battery, **characterized in that** the lithium ion battery comprises a positive electrode sheet, and the positive electrode sheet is the positive electrode sheet according to claim 8 or 9.
